# EUROPEAN PATENT APPLICATION

(11) **EP 4 535 273 A1**
(43) Date of publication of application: **09.04.2025**
(21) Application number: 23811414.4
(22) Date of filing: 22.03.2023
(51) Int. Cl.: G06Q 50/04

(54) **INFORMATION PROCESSING DEVICE, MANUFACTURING HISTORY DISPLAY SYSTEM, MANUFACTURING HISTORY DISPLAY METHOD, AND MANUFACTURING HISTORY DISPLAY PROGRAM**

(30) Priority: 24.05.2022 JP 2022084682
(71) Applicant: DENSO CORPORATION, Aichi-pref., 448-8661 (JP)
(72) Inventor: OKABE, Tatsuya, Kariya-city, Aichi-pref., 448-8661 (JP)
(74) Representative: Winter, Brandl - Partnerschaft mbB
(86) International application number: PCT/JP2023/011267
(87) International publication number: WO 2023/228533

(57) **Abstract**

An information processing device (12) reads, from a server (14), attached information (18) of a product (16), which is linked to traceability information of the product and is attached to the product, acquires, from the server (14), the traceability information linked to the read attached information, and displays the acquired traceability information on a display unit (22). The traceability information is information in which multiple pieces of process information indicating processes related to manufacturing of the product (16) are recorded in chronological order. The attached information (18) defines whether each of the multiple pieces of the process information is viewable on the display unit.

## Description

### CROSS REFERENCE TO RELATED APPLICATION

The present application is based on Japanese Patent Application No. 2022-084682, filed on May 24, 2022, the contents of which are incorporated herein by reference.

### TECHNICAL FIELD

The present disclosure relates to an information processing device, a manufacturing history display system, a manufacturing history display method, and a manufacturing history display program.

### BACKGROUND

In recent years, there has been an increasing demand for the management of (a) product manufacturing processes and (b) the amount of carbon dioxide emissions during product manufacturing.

Therefore, there is a need to comprehend the manufacturing process of products.

Here, Patent Document 1 describes a supply chain management method that is implemented by a computer and that manages transaction records between traders in a supply chain that is constructed including a plurality of traders.

Patent Document 1 uses an example of a logistics route for bread described as follows: (1) a seed producer ships wheat seeds to a wheat farmer, (2) the wheat farmer ships the wheat grown from the seeds to a flour manufacturer, (3) the flour manufacturer processes the wheat and ships the flour made from it to a bread manufacturer, (4) the bread manufacturer ships the bread made from the flour to a convenience store, and (5) the convenience store sells the procured bread to consumers.

In the management method of Patent Document 1, consumers can view transaction records of ingredients, processing processes, distribution processes, etc. by reading a QR code (registered trademark) attached to the bread they purchase.

### [PRIOR ART DOCUMENT]

### [PATENT DOCUMENT]

[Patent Document 1] WO 2021/002226 A

### [SUMMARY OF THE INVENTION]

Although Patent Document 1 gives an example of a product with a relatively small number of processes, in case of a recyclable product, processes such as manufacturing, shipping, and recycling of the product are repeated. Further, as the number of processes increases, the chains of suppliers also become more numerous and complex.

Further, allowing anyone to check a product's manufacturing process, etc. by reading a QR code attached to the product may be not always desirable, considering that products are manufactured by way of numerous supply chains.

It is one objective of the present disclosure to provide an information processing device, a manufacturing history display system, a manufacturing history display method, and a manufacturing history display program that are capable of providing viewing restrictions on processes related to the manufacturing of a product.

The present disclosure employs the following problem-solving measures for achieving the above-described object. The reference symbols in parentheses described in claims indicate correspondence to the concrete means to be described in the embodiment, and the concrete means is described as an example. Thus, the technical scope of the present disclosure is not necessarily limited thereto.

An information processing device in one embodiment of the present disclosure includes:
a reader that is configured to read attached information that is linked to manufacturing history information of a product and is attached to the product;
an acquisition controller that is acquire, from a server, the manufacturing history information linked to the attached information read by the reader; and
a display controller that is configured to display the manufacturing history information acquired by the acquisition controller on a display unit, wherein
the manufacturing history information is information that records, in chronological order, multiple pieces of process information each indicative of a manufacturing-related process on the product, and
the attached information defines whether each of the multiple pieces of the process information is viewable on the display unit.

Such configuration acquires the manufacturing history information from a server and displays the acquired information on the display unit, by reading the attached information attached to the product. The manufacturing history information is information in which multiple pieces of process information respectively indicating a process related to manufacturing of the product are recorded in chronological order. The process information is, for example, information on various processes for one product, such as procurement of raw materials, processing of the raw materials into parts, assembly of the parts into a product, transportation of the raw materials and parts, inspection of the parts and products and the like. Further, when recycled materials are used as raw materials, the recycling process is also included in the manufacturing history.

Here, multiple supply chains are often involved in the manufacturing of a product. Therefore, it may be not always desirable to allow anyone to check a product's manufacturing process, etc. by reading the information attached to the product, given that the product is manufactured through the involvement of many supply chains.

Therefore, according to the configuration of the present disclosure, whether the process information is viewable on the display unit is defined by the attached information, piece by piece from among the multiple pieces of process information. In such manner, the process information is made viewable for a user only within a range determined by the attached information. That is, the configuration of the present disclosure restricts viewing of the processes involved in the manufacturing of the product.

In the above-described information processing device, the attached information attached to the product at a particular process defines that (i) the process information on the particular process of the product and the process information on one or more upstream processes upstream of the particular process of the product are viewable on the display unit and (ii) the process information on one or more downstream processes downstream of the particular process of the product are not viewable on the display unit. According to such configuration, for example, an upstream manufacturing process upstream of a product manufactured by an own company is viewable, while a downstream manufacturing process that is a manufacturing process by other company using the own products is not viewable.

In the information processing device, the process information defined not to be displayed is changed to be displayed when a predetermined password is input. According to such configuration, it is possible to lift the viewing restrictions for individuals with special authority, such as a supervisor of all processes, an administrative official or the like.

In the above-described information processing device, the manufacturing history information includes a process related to recycling of the product, and when the processes of (a) returning raw materials through the recycling, (b) manufacturing the product, and (c) recycling the product are repeatedly recorded multiple times, a most recent return of the raw materials through the recycling is defined as a most upstream process to be displayed on the display unit.

According to such configuration, even if the manufacturing process and recycling process of the product are repeated by multiple times, the returning of raw materials from the most recent recycling is considered as the most upstream process that is made viewable, thereby making it easier for the user to comprehend the manufacturing process and recycling process of the product.

In the above-described information processing device, the attached information may be information on raw materials, information on manufacturing, carbon footprint, due diligence, carbon dioxide emission trading history, carbon tax payment history, information on carbon border adjustment treatment payment history, or may also be a hash value calculated therefrom or a hash value calculated from Merkle root.

The attached information is generated by including carbon emissions, carbon dioxide emissions trading, carbon tax payment history, carbon border adjustment treatment payment history, and the like. Further, carbon neutrality, which is a timing at which carbon emissions and various emission rights are offset, may be the most upstream displayable process on the display unit. In such manner, the duplicate payment of various taxes on carbon dioxide emissions as well as the unduly increase of the amount of the carbon emissions of materials that have been recycled multiple times are preventable, which facilitate the use of the recycled materials.

A manufacturing history display system in one embodiment of the present disclosure includes:
a server that is configured to store manufacturing history information that records, in chronological order, multiple pieces of process information each indicative of a manufacturing-related process on a product; and
an information processing device that is configured to, by reading attached information that is linked to the manufacturing history information and is attached to the product:
   acquire the manufacturing history information linked to the attached information from the server; and
   display the manufacturing history information on a display unit, wherein
the attached information defines whether each of the multiple pieces of the process information is viewable on the display unit.

A manufacturing history display method in one embodiment of the present disclosure includes:
a first process of reading, with a reader, attached information that is linked to manufacturing history information of a product and is attached to the product;
a second process of acquiring, with an acquisition controller from a server, the manufacturing history information that is linked to the attached information read by the reader; and
a third process of displaying, with a display unit, the manufacturing history information acquired by the acquisition controller, wherein
the manufacturing history information is information that records, in chronological order, multiple pieces of process information each indicative of a manufacturing-related process on the product, and
the attached information defines whether each of the multiple pieces of the process information is viewable on the display unit.

A manufacturing history display program in one embodiment of the present disclosure causes a computer provided in an information processing device to serve as:
a reader that is configured to read attached information that is linked to manufacturing history information of a product and is attached to the product;
an acquisition controller that is configured to acquire, from a server, the manufacturing history information linked to the attached information read by the reader; and
a display controller that is configured to display the manufacturing history information acquired by the acquisition controller on a display unit, wherein
the manufacturing history information is information that records, in chronological order, multiple pieces of process information each indicative of a manufacturing-related process on the product, and
the attached information defines whether each of the process information is viewable on the display unit.

### ADVANTAGEOUS EFFECTS OF THE INVENTION

According to the present disclosure, it is possible to restrict viewing of the processes involved in the manufacturing of a product.

### BRIEF DESCRIPTION OF THE DRAWINGS

The above-described objects, features and advantages of the present disclosure will become more apparent from the following detailed description taken in conjunction with the accompanying drawings.
FIG. 1 is a schematic diagram of a manufacturing history display system according to an embodiment.
FIG. 2 is a diagram of a display mode of process information by a mobile terminal device of the present embodiment, where FIG. 2 (A) is a diagram showing the process information initially displayed on a display unit, and FIG. 2 (B) is a diagram showing the process information displayed when the display unit displaying FIG. 2 (A) is swiped to the right.
FIG. 3 is a schematic diagram showing a manufacturing process of a product of the present embodiment.
FIG. 4 is a schematic diagram showing a relationship between processes and attached information attached to the product according to the present embodiment.
FIG. 5 is a schematic diagram showing a manufacturing process that is viewable in association with the attached information of the present embodiment.
FIG. 6 is a functional block diagram relating to a display of traceability information in the manufacturing history display system of the present embodiment.
FIG. 7 is a flowchart showing a flow of a manufacturing history display process according to the present embodiment.

### EMBODIMENTS FOR CARRYING OUT INVENTION

The following describes embodiments of the present disclosure with reference to the drawings. The embodiments described below show examples of the present disclosure, and the present disclosure is not limited to the specific configuration described below. In an implementation of the present disclosure, a specific configuration according to the embodiments may be adopted as appropriate.

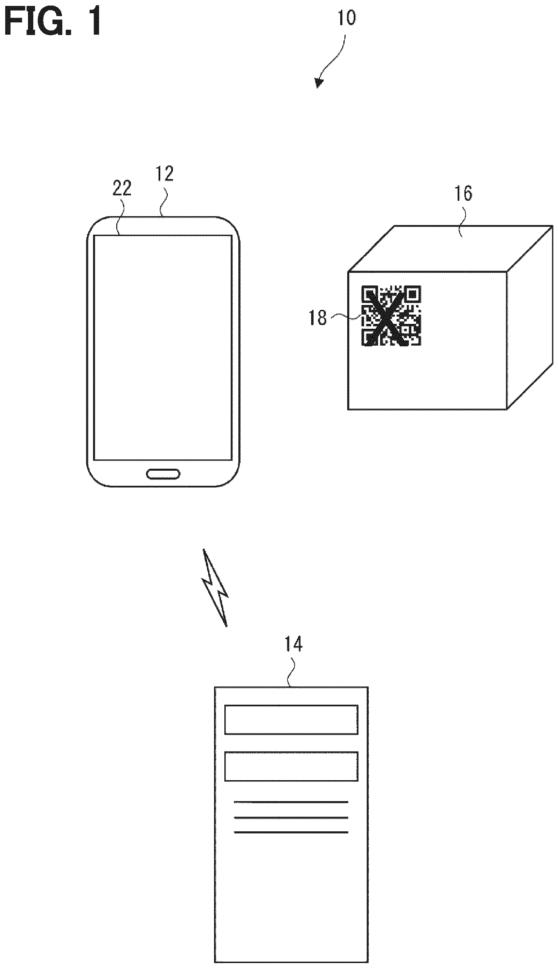

FIG. 1 is a schematic diagram of a manufacturing history display system 10 according to the present embodiment. The manufacturing history display system 10 of the present embodiment includes a mobile terminal device 12 and a server 14.

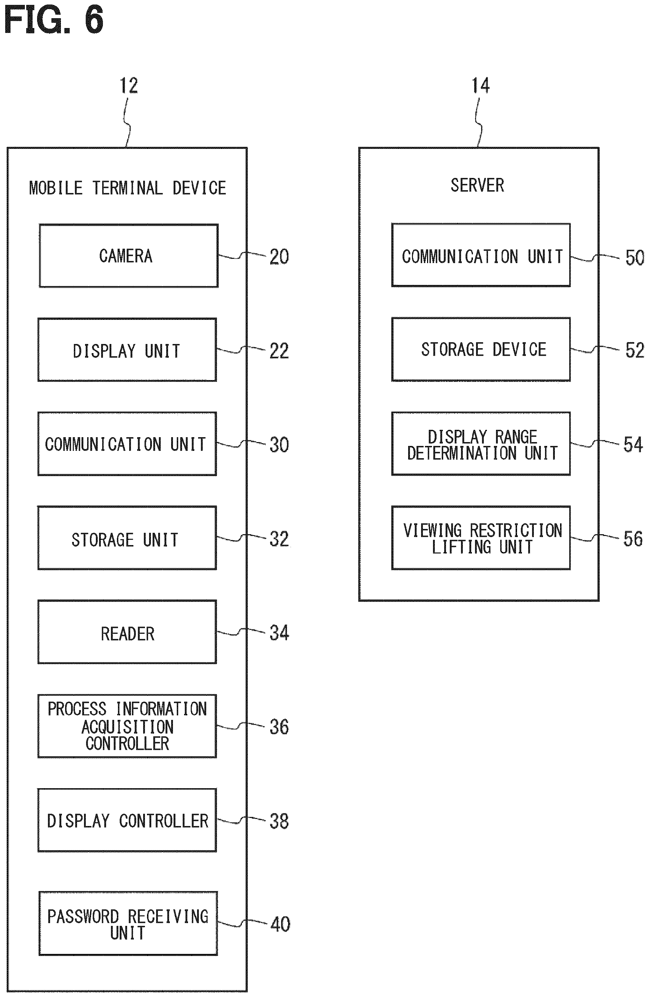

The mobile terminal device 12 is an information processing device such as a smartphone or a tablet terminal that includes a camera 20 (see FIG. 6) and a display unit 22 such as a touch panel display or the like. In addition, the mobile terminal device 12 is not limited to the above, and as long as it is configured to be capable of reading attached information 18 (such as a QR code) of a product 16 described below and displaying process information, it may be a dedicated device for displaying the process information, or it may be a reading device incorporated into an existing manufacturing device for manufacturing the product 16.

The mobile terminal device 12 captures an image of the attached information 18 attached to the product 16 using the camera 20, and reads recorded contents of the attached information 18.

The attached information 18 is an information code that is linked to manufacturing history information of the product 16 and that is attached to the product 16. The attached information 18 in the present embodiment is, for example, a QR code, but is not limited to the above and may be other information codes such as two-dimensional codes or one-dimensional codes such as barcodes. The attached information 18 records at least a contact address (an IP address or URL of the server 14, etc.) for the manufacturing history information attached to the product 16. The manufacturing history information is also information that enables a process of the product 16 to be traceable from its manufacture to its consumption, and will be referred to as traceability information in the following description.

The traceability information is information in which multiple pieces of process information indicating the processes related to the manufacturing of the product 16 are recorded in chronological order, and is stored in the server 14. The product 16 may be raw materials, parts manufactured by processing the raw materials, a final product combining a plurality of parts, etc., and may take various forms in the manufacturing process.

For example, a raw material procurement process or a parts processing process may include a branch leading to a manufacturing process of other products 16. The other products 16 mentioned here include not only an own company's products 16 but also products 16 of other companies. Further, the traceability information may also include a series of processes from when the used product 16 is collected and recycled to when the product 16 is manufactured using recycled materials.

The server 14 accumulates data relating to the manufacturing process of each product 16 as process information by sequentially adding the data to the traceability information in chronological order. Each process information includes information such as a content of the process, date and time of registration of the process information, a product name of the product 16, information about a supply chain (company name, manufacturing base name, location information of the manufacturing base), the transportation route of the product 16 and the like.

Further, each process information includes information on when and where the process was performed, an amount of carbon dioxide (CO2) emitted in the process, and the like. The amount of carbon dioxide emitted includes not only an amount of carbon dioxide emitted during the process directly related to the manufacturing, but also an amount of carbon dioxide emitted by transportation equipment such as ships and trucks during the transportation of the product 16. In such manner, carbon footprinting with traceability information is realized.

In the present embodiment, as an example, blockchain technology is used to manage the traceability information in order to prevent tampering with the traceability information. Specifically, for example, the server 14 generates hash values of data related to each process of the product 16, groups these data (hash values) into one block, and performs an embedding process of the block to be linked to the end of the blockchain. As the manufacturing process of the product 16 progresses, the server 14 repeatedly calculates a hash value that reflects the manufacturing process up to that point. In such manner, the hash value provided for each manufacturing process of the product 16 is a value (Merkle root) that reflects all the manufacturing processes up to that point. In such manner, the traceability information is stored using the blockchain so as to be linked to the process information of the product 16. The server 14 of the present embodiment then generates attached information 18 in which a hash value is recorded together with the contact information for traceability information of the attached product 16, and outputs the generated attached information 18 in a form that can be attached to the product 16.

The QR code, which is the attached information 18, is attached to each product 16 in each process. The attached information 18 may be attached directly to the product 16, or may be attached to a container that contains the product 16, a tag that manages the product 16, or the like. The attached information 18 is, for example, newly generated by the server 14 for each predetermined process. In such case, a manufacturer (supply chain) of the product 16 for which the attached information 18 has been newly generated outputs the QR code onto a paper medium or the like and attaches it to each product 16.

The mobile terminal device 12 captures the attached information 18 attached to the product 16 with the camera 20, and acquires the traceability information indicating the manufacturing process of the product 16 from the server 14 based on the recorded contents (contact information) acquired by reading the attached information 18. The mobile terminal device 12 then displays the traceability information acquired from the server 14 on the display unit 22.

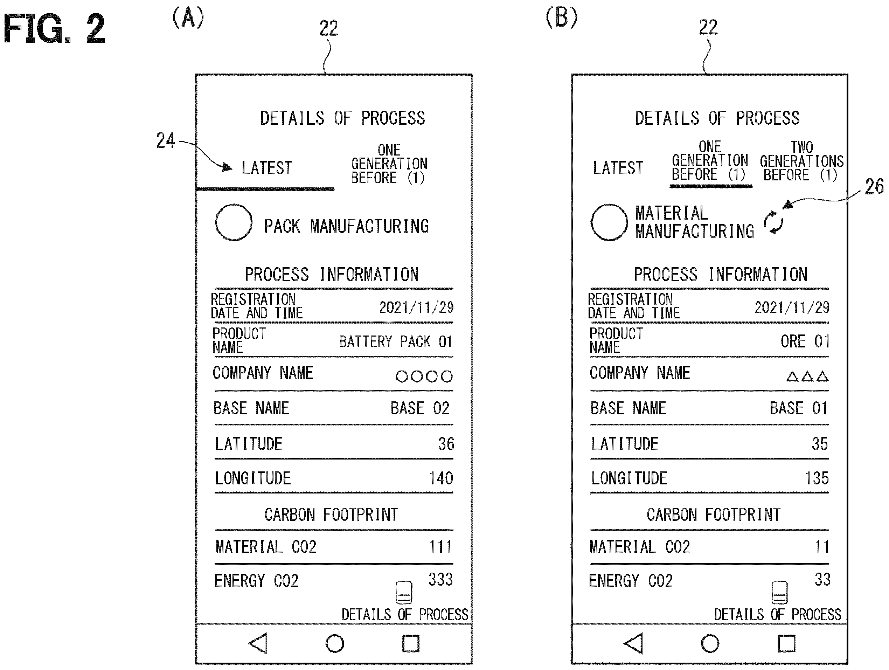

FIG. 2 is a diagram showing a display form of process information on the mobile terminal device 12 of the present embodiment. Note that, when the mobile terminal device 12 reads the attached information 18 and acquires the process information from the server 14, an application (hereinafter referred to as the "display application") that has been installed in advance on the mobile terminal device 12 is launched, and the acquired process information is displayed on the display unit 22.

As shown in FIG. 2, the mobile terminal device 12 of the present embodiment displays each piece of process information contained in the traceability information on the display unit 22, and transitions the process information displayed on the display unit 22 in chronological order in response to operations by a user.

FIG. 2 (A) is a diagram showing the process information that is firstly displayed on the display unit 22 by reading the attached information 18. Then, by swiping the display unit 22 displayed in FIG. 2 (A) to the right, the process information immediately preceding that shown in FIG. 2 (A) is displayed as shown in FIG. 2 (B).

In such manner, the mobile terminal device 12 of the present embodiment transitions the process information displayed on the display unit 22 in response to the user's operation to the left or right on the display unit 22. In such manner, it is easy for the user to comprehend the process and the operability is improved. In the present embodiment, the process information displayed on the display unit 22 is transitioned by swiping on the display unit 22. However, the configuration is not limited to the above. For example, an arrow button for transitioning the display of the process may be displayed on the display unit 22, and the displayed process information may be transitioned by clicking the arrow button.

In the present embodiment, the mobile terminal device 12 starts with, as display on the display unit 22, the latest process information so that the user can easily comprehend the currently-displayed process, and displays on the display unit 22 a degree of deviation between the process information currently displayed on the display unit 22 and the latest process information.

The degree of deviation is displayed as a "generation" in a generation display field 24 in FIG. 2. In FIG. 2 (A), the latest process information is displayed, so "latest" is highlighted in the generation display field 24. FIG. 2 (B) shows the process information of one generation before the latest one, so "one generation before (1)" is highlighted in the generation display field 24. Further, when the user swipes rightward in a display state of FIG. 2 (B), the process information from two generations before is displayed on the display unit 22, and "two generations before (1)" is highlighted in the generation display field 24.

Further, as shown in FIG. 2 (B), the mobile terminal device 12 causes the display unit 22 to display an operation image (hereinafter referred to as a "back to latest button") 26 for returning the display on the display unit 22 to the latest process information. In such manner, even when upstream process information is being displayed, the latest process information is displayed on the display unit 22 by operating (clicking) the back to latest button 26, making it easier for the user to comprehend the process and improving operability. It should be noted that the back to latest button 26 is not displayed when the latest process information is displayed on the display unit 22. As described below, if the latest process information cannot be displayed due to viewing restrictions, when the back to latest button 26 is operated, the mobile terminal device 12 displays on the display unit 22 the process information that is closest to the latest among the process information that is displayable.

Further, the display unit 22 displays the names of the process information being displayed, such as "pack manufacturing" and "material manufacturing," as well as, as detailed process information, date and time of registration in the traceability information, the product name of the product 16, the name of the company that manufactured the product 16, the name of the base where the product 16 was manufactured, and the latitude and longitude indicating the location of the base.

The display unit 22 also displays at least one of the amount of carbon dioxide (CO2 amount) emitted for each process and the total amount (accumulated value) of the amount of carbon dioxide emitted in the processes up to that point. In such manner, a carbon footprint is realized, allowing the user to comprehend the amount of carbon dioxide emitted in the manufacturing process.

In the mobile terminal device 12 of the present embodiment, information that cannot be displayed on one screen of the display unit 22 may be displayed by swiping up and down or in an accordion display.

In such manner, the mobile terminal device 12 of the present embodiment displays each piece of process information contained in the traceability information on the display unit 22, one piece at a time. However, configuration is not limited to the above, and the mobile terminal device 12 may display multiple pieces of process information on the display unit 22 at once.

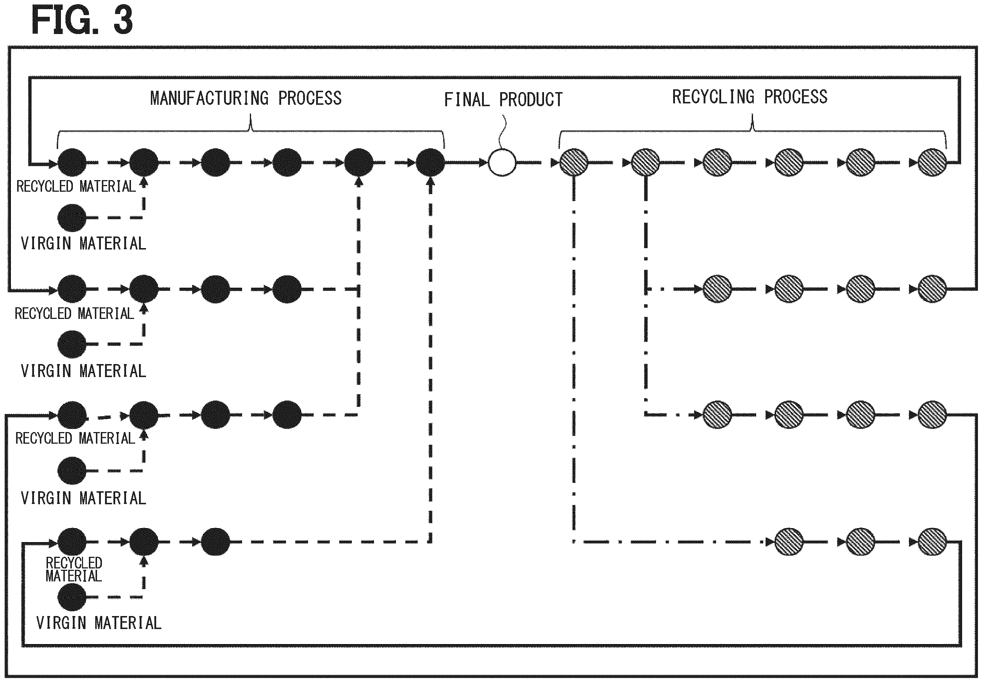

FIG. 3 is a schematic diagram showing the manufacturing process of the product 16. In the following description, an upstream side of the process may also be referred to as a pre-process, and a downstream side of the process may also be referred to as a post-process. Manufacturing the product 16 requires various processes, including a supply chain, such as procuring various raw materials, processing them into parts, assembling the parts into a final product, transporting the raw materials and parts, and inspecting the parts and final products. There are also various aspects such as adding a process, integrating processes, and branching a process. The integration of processes refers to a mode in which a plurality of pre-processes are integrated into one post-process. The branching a process is a mode in which one pre-process is divided into multiple post-processes.

FIG. 3 includes a recycling process in which a final product is recycled and used again as raw material (recycled material). That is, as an example, black circles in FIG. 3 represent the manufacturing process of the product 16, white circles represent the final product, and hatched circles represent the recycling process. In the example of FIG. 3, the final product is manufactured using not only the recycled materials but also virgin materials, which are new raw materials. However, the final product may be manufactured using only the recycled materials.

As shown in FIG. 3, the manufacturing process of the product 16 including the recycling process involves repeatedly manufacturing and recycling the final product. In such manner, the number of processes increases, making the supply chain more numerous and complex. Further, allowing anyone to check the manufacturing process, etc., of the product 16 by reading the attached information 18 attached to the product 16 may be not desirable, considering that the product 16 is manufactured through the involvement of many supply chains.

Therefore, in the present embodiment, the process information displayable on the display unit 22 is determined for each piece of the attached information 18. In such manner, the user is allowed to view the process information only within a range determined by the attached information 18. Therefore, the manufacturing history display system 10 of the present embodiment can restrict the viewing of the processes related to the manufacturing of the product 16.

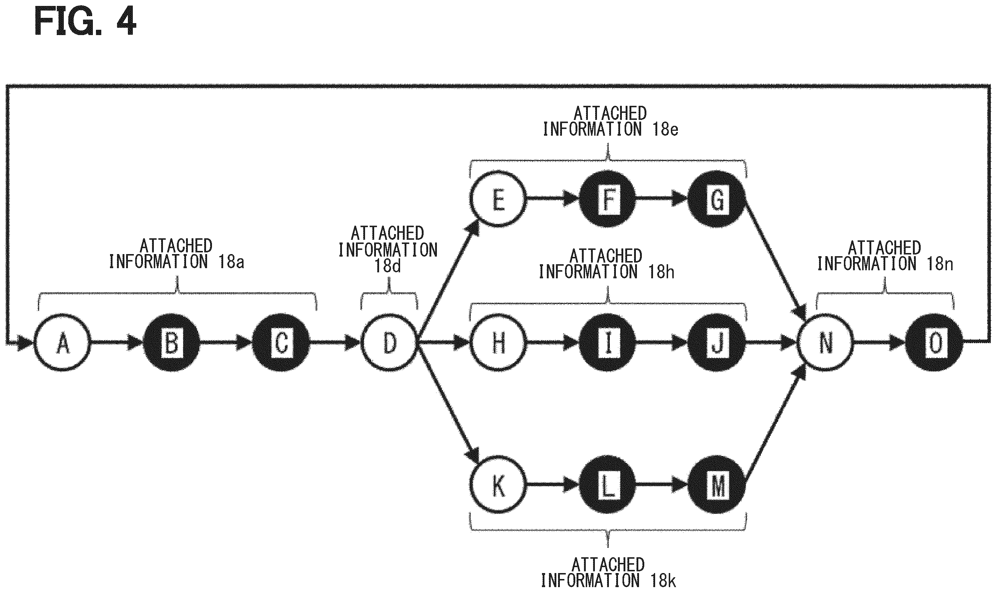

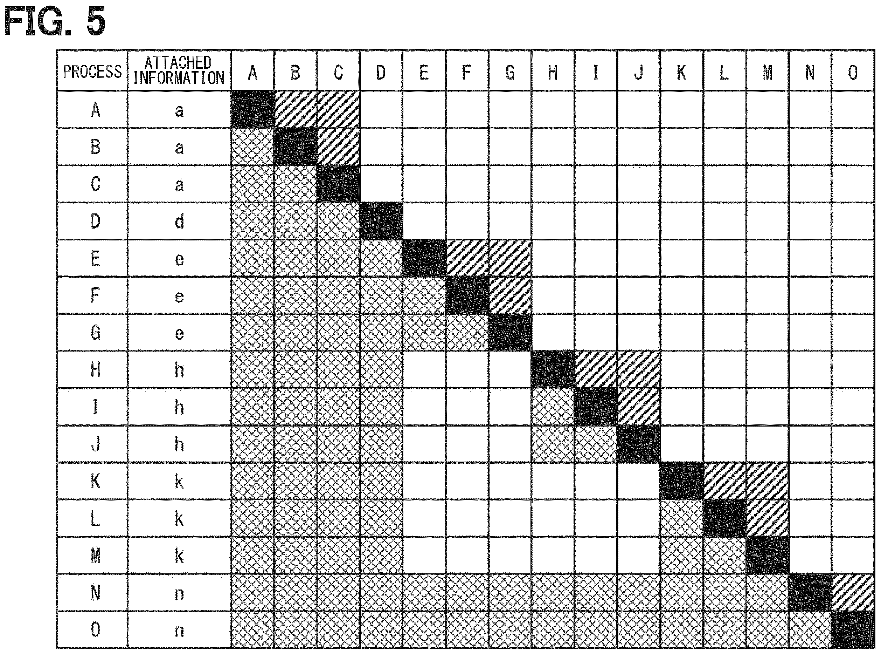

The attached information 18 and the process information that is displayable will be described with reference to FIGS. 4 and 5. FIG. 4 is a schematic diagram showing a relationship between the attached information 18 attached to the product 16 and the process. In an example of FIG. 4, processes A to C, process D, processes E to G, processes H to J, processes K to M, and processes N to O are processes that are each performed by a different supply chain. The product 16 in the processes A to C has attached information 18a attached thereto. This attached information 18a is attached to the product 16 in the process A.

Similarly, the product 16 in the process D has attached information 18d attached thereto. This attached information 18d is attached to the product 16 in the process D. The product 16 in the processes E to G has attached information 18e attached thereto. This attached information 18e is attached to the product 16 in the process E. The product 16 in the processes H to J has attached information 18h attached thereto. This attached information 18h is attached to the product 16 in the process H. The products 16 in the processes K to M has attached information 18k attached thereto. This attached information 18k is attached to the product 16 in the process K. The products 16 in the processes N to O has attached information 18n attached thereto. This attached information 18n is attached to the product 16 in the process N.

In the present embodiment, the attached information 18 determines the displayability of the process information of the attached product 16 such that (a) the process information of the current process and the upstream therefrom is displayable, and (b) the process information of the downstream process is not displayable. In such manner, the manufacturing history display system 10 of the present embodiment allows the user to view, for example, the manufacturing process upstream of a product 16 manufactured by the user's own company, but does not allow the user to view the downstream manufacturing process, which is a manufacturing process carried out by other company using the user's own company product 16.

The attached information 18 attached to the product 16 is replaced (to new information) every time a viewable process changes. In the example of FIG. 4, the attached information 18a is attached to the product 16 in the process A, then is replaced with the attached information 18d in the process D, and so on, until the attached information 18e is attached in the process E, the attached information 18h is attached in the process H, the attached information 18k is attached in the process K, and the attached information 18n is attached in the process N.

FIG. 5 is a schematic diagram showing the manufacturing process that is viewable and is associated with the attached information 18, and corresponds to FIG. 4. The process filled in black is a current process, the process hatched with diagonal lines is a process downstream of the current process, and the process hatched with cross lines is a process upstream of the current process.

That is, in the example of FIGS. 4 and 5, when the mobile terminal device 12 reads the attached information 18a, the process information of the processes A to C is displayable, but the process information on the downstream side is not displayable. Further, when the portable terminal device 12 reads the attached information 18d, the process information of the processes A to C is displayable together with the process information of the process D, but the process information on the downstream side is not displayable. When the portable terminal device 12 reads the attached information 18e, the process information of the processes A to D is displayable together with the process information of the processes E to G, but the process information on the downstream side is not displayable. When the portable terminal device 12 reads the attached information 18h, the process information of the processes A to D is displayable together with the process information of the processes H to J, but the process information on the downstream side is not displayable. When the portable terminal device 12 reads the attached information 18k, the process information of the processes A to D is displayable together with the process information of the processes K to M, but the process information on the downstream side is not displayable. When the attached information 18n is read by the mobile terminal device 12, the process information of the processes A to M together with the process information of the processes N to O, that is, all the process information, is displayable.

Here, a method for generating the attached information 18 that sets viewing restrictions on the process information will be described. In the present embodiment, the attached information 18 calculates a Merkle route for each process, and records the context of the Merkle route for each process in the server 14. In each process, the Merkle route is included in the attached information 18. When the attached information 18 attached to the product 16 is read by the mobile terminal device 12, the server 14 searches only the upstream process side. Further, when the most upstream process is reached during the search, the search information is displayed as a search result on the display unit 22 of the mobile terminal device 12 without searching any further. However, by inputting a specific password, it becomes possible to perform a search after reaching the most upstream process and a search on the downstream process side. In such manner, it is possible for those with special authority, such as a supervisor of all processes or an administrative official, to view the necessary information.

The attached information 18 may be information such as raw material information, manufacturing information, carbon footprint, due diligence, carbon dioxide emission trading history, carbon tax payment history, carbon border adjustment treatment payment history, etc., or a hash value of these information or a hash value calculated from the Merkle root. That is, the hash value is converted to generate a QR code, which is the attached information 18.

In such manner, the attached information is generated including carbon emissions, carbon dioxide emissions trading, carbon tax payment history, carbon border adjustment treatment payment history, and the like. Further, in the present embodiment, carbon neutrality, which is a timing at which carbon emissions and various emission rights are offset, may be set as the most upstream displayable process on the display unit 22. In such manner, the duplicate payment of various taxes on carbon dioxide emissions as well as the unduly increase of the amount of the carbon emissions of materials that have been recycled multiple times are preventable, which facilitate the use of the recycled materials.

Further, in the mobile terminal device 12 of the present embodiment, by inputting a predetermined password, the process information that is not displayable becomes displayable. The password is, for example, entered by the user via a display application, transmitted to the server 14, and authenticated by the server 14. In such manner, viewing restrictions are lifted for individuals with special authority, such as a supervisor of all processes, an administrative official and the like.

FIG. 6 is a functional block diagram relating to the display of traceability information in the manufacturing history display system 10.

The mobile terminal device 12 includes the camera 20 and the display unit 22, as well as a communication unit 30, a storage unit 32, a reader 34, a process information acquisition controller 36, a display controller 38, and a password receiving unit 40.

The camera 20 has an imaging function, and in the present embodiment, captures an image of the attached information 18 attached to the product 16.

The display unit 22 is, for example, a touch panel display, and displays various data and accepts operations on the mobile terminal device 12 by the user.

The communication unit 30 transmits and receives information to and from other information processing devices such as the server 14 or the like. Further, the communication unit 30 in the present embodiment transmits and receives information to and from the server 14 via a communication unit 50 provided in the server 14. The server 14 includes a storage device 52 which stores the traceability information of the product 16.

The storage unit 32 stores various data such as programs (applications) related to reading the attached information 18 and displaying the process information, and the process information acquired from the server 14.

The reader 34 reads the attached information 18 (QR code) captured by the camera 20. The reader 34 then performs a decoding process to decode the information recorded in the read attached information 18.

The process information acquisition controller 36 acquires the traceability information linked to the attached information 18 read by the reader 34 from the server 14 via the communication unit 30. Further, the process information acquisition controller 36 in the present embodiment does not acquire all of the traceability information from the server 14 at once, but instead sequentially acquires the process information before and after the process information displayed on the display unit 22 from the server 14. The process information acquired from the server 14 is stored in the storage unit 32.

Further, when acquiring the traceability information, the process information acquisition controller 36 transmits information indicating a displayable range of the process information determined in the attached information 18 (hereinafter referred to as "displayable range information") to the server 14 via the communication unit 30. The displayable range information is acquired by reading the attached information 18 with the reader 34. In other words, the process information that is not included in the displayable range information is subject to viewing restrictions.

The display controller 38 controls the display unit 22 to display various images. The display controller 38 of the present embodiment causes the display unit 22 to display the traceability information acquired by the process information acquisition controller 36.

The password receiving unit 40 receives, via the display unit 22, an input of a password for enabling the display of the process information that is not displayable. The password receiving unit 40 transmits the input password to the server 14 via the communication unit 30.

The server 14 includes the communication unit 50, the storage device 52, a displayable range determination unit 54, and a viewing restriction lifting unit 56.

The displayable range determination unit 54 determines, based on the displayable range information received from the mobile terminal device 12 via the communication unit 50, a range of the process information displayable on the mobile terminal device 12 that has transmitted the displayable range information.

The viewing restriction lifting unit 56 authenticates the password received from the mobile terminal device 12 via the communication unit 50, and if authentication is successful, enables the display of all process information on the mobile terminal device 12 that has transmitted the password.

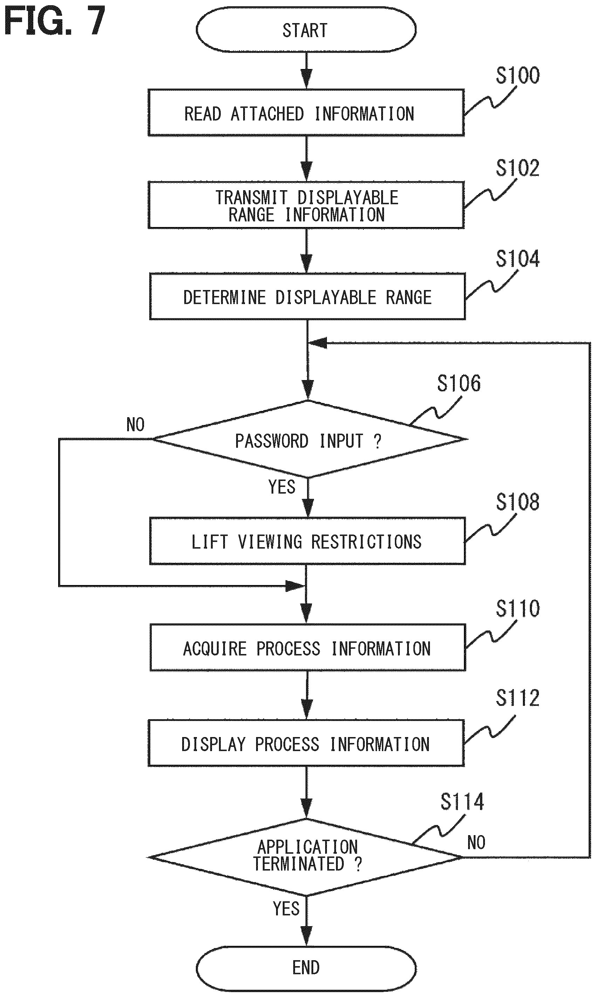

FIG. 7 is a flowchart showing a flow of a manufacturing history display process executed by the manufacturing history display system 10. The manufacturing history display process is started by activating a program (display application) stored in a recording medium such as the storage unit 32 included in the mobile terminal device 12. By executing the program, a method corresponding to the program is performed.

First, in step S100, the mobile terminal device 12 captures an image of the attached information 18 of the product 16 with the camera 20, and reads the contents of the attached information 18.

In the next step S102, the process information acquisition controller 36 transmits the displayable range information acquired by reading the attached information 18 to the server 14 via the communication unit 30.

In the next step S104, the displayable range determination unit 54 of the server 14 determines, based on the displayable range information received via the communication unit 50, the process information displayable on the mobile terminal device 12 that has transmitted the displayable range information.

In the next step S106, the process information acquisition controller 36 determines whether or not a password has been input, and if the determination is affirmative, the process information acquisition controller 36 transmits the password to the server 14 and proceeds to step S108. On the other hand, if the determination is negative, the process proceeds to step S110.

In step S108, the viewing restriction lifting unit 56 of the server 14 authenticates the password, and if the authentication is successful, lifts the viewing restriction, and the process proceeds to step S110.

In step S110, the process information acquisition controller 36 acquires the process information from the server 14 via the communication unit 30.

In the next step S112, the display controller 38 causes the display unit 22 to display the process information. When the user operates the display unit 22 to transition the process information displayed on the display unit 22, the process information acquisition controller 36 sequentially acquires the process information from the server 14. At this time, if the process information that the user wishes to display on the display unit 22 is subject to viewing restrictions, an image indicating that the process information is subject to viewing restrictions is displayed on the display unit 22.

Further, the traceability information of the present embodiment also includes a process related to the recycling of the product 16, and the processes of (a) returning the raw materials through recycling, (b) manufacturing the product 16, and (c) recycling the product 16 are recorded multiple times. In case of having the traceability information in such form, it is possible to display the repetition of the manufacturing process and recycling process of the product 16 indefinitely, but doing so without limitation is likely to exceed the user's comprehension.

Therefore, in the manufacturing history display system 10 of the present embodiment, return of raw materials through the most recent recycling is set as the most upstream displayable process on the display unit 22. In other words, only a combination of one manufacturing process and a recycling process is displayable. That is, in the example of FIG. 3, the procurement process of recycled materials and virgin materials located at the left end of FIG. 3 is considered to be the most upstream process that is displayable, and any processes that include a recycling process before that are not displayable.

In such manner, even if the manufacturing process and recycling process of the product 16 are repeated multiple times, the return of the raw materials from the latest recycling is the most upstream process that is viewable, making it easier for the user to comprehend the manufacturing process and recycling process of the product 16.

As another example, the total amount of carbon dioxide emitted in each process displayed on the display unit 22 is reset when the recycled material or virgin material is procured as raw material, thereby a cumulative value thereafter for the subsequent processes is calculated.

In the next step S114, it is determined whether or not an operation to terminate the display application has been performed, and if the determination is affirmative, the display application is terminated, and if the determination is negative, the process returns to step S106.

Although the present disclosure is explained with the embodiment described above, the technical scope of the present disclosure is not limited to the scope described in the embodiment. Various changes or improvements can be made to the above-described embodiment without departing from the spirit of the present disclosure, and the embodiment having such modifications or improvements is also included in the technical scope of the present disclosure.

## Claims

1. An information processing device (12), comprising:
a reader (28) that is configured to read attached information (18) that is linked to manufacturing history information of a product and is attached to the product;
an acquisition controller (30) that is acquire, from a server (14), the manufacturing history information linked to the attached information read by the reader; and
a display controller (32) that is configured to display the manufacturing history information acquired by the acquisition controller on a display unit (22), wherein
the manufacturing history information is information that records, in chronological order, multiple pieces of process information each indicative of a manufacturing-related process on the product, and
the attached information defines whether each of the multiple pieces of the process information is viewable on the display unit.

2. The information processing device of claim 1, wherein
the attached information attached to the product at a particular process defines that (i) the process information on the particular process of the product and the process information on one or more upstream processes upstream of the particular process of the product are viewable on the display unit and (ii) the process information on one or more downstream processes downstream of the particular process of the product are not viewable on the display unit.

3. The information processing device of claim 1 or 2, wherein
the process information defined not viewable is changed to be viewable when a predetermined password is input.

4. The information processing device of claim 1 or 2, wherein
the manufacturing history information includes a process related to recycling of the product, and
when the processes of (a) returning raw materials through the recycling, (b) manufacturing the product, and (c) recycling the product are repeatedly recorded multiple times, a most recent return of the raw materials through the recycling is defined as a most upstream process to be displayed on the display unit.

5. The information processing device of claim 1 or 2, wherein
the attached information is information on raw materials, information on manufacturing, carbon footprint, due diligence, carbon dioxide emission trading history, carbon tax payment history, information on carbon border adjustment treatment payment history, or a hash value calculated therefrom or a hash value calculated from Merkle root.

6. A manufacturing history display system (10), comprising:
a server that is configured to store manufacturing history information that records, in chronological order, multiple pieces of process information each indicative of a manufacturing-related process on a product; and
an information processing device that is configured to, by reading attached information that is linked to the manufacturing history information and is attached to the product:
acquire the manufacturing history information linked to the attached information from the server; and
display the manufacturing history information on a display unit, wherein
the attached information defines whether each of the multiple pieces of the process information is viewable on the display unit.

7. A manufacturing history display method, comprising steps of:
a first process of reading, with a reader, attached information that is linked to manufacturing history information of a product and is attached to the product;
a second process of acquiring, with an acquisition controller from a server, the manufacturing history information that is linked to the attached information read by the reader; and
a third process of displaying, with a display unit, the manufacturing history information acquired by the acquisition controller, wherein
the manufacturing history information is information that records, in chronological order, multiple pieces of process information each indicative of a manufacturing-related process on the product, and
the attached information defines whether each of the multiple pieces of the process information is viewable on the display unit.

8. A manufacturing history display program for causing a computer of an information processing device to serve as:
a reader that is configured to read attached information that is linked to manufacturing history information of a product and is attached to the product;
an acquisition controller that is configured to acquire, from a server, the manufacturing history information linked to the attached information read by the reader; and
a display controller that is configured to display the manufacturing history information acquired by the acquisition controller on a display unit, wherein
the manufacturing history information is information that records, in chronological order, multiple pieces of process information each indicative of a manufacturing-related process on the product, and
the attached information defines whether each of the process information is viewable on the display unit.
